(19) Europäisches Patentamt / European Patent Office / Office européen des brevets

(11) **EP 3 982 158 A1**

(12) **EUROPEAN PATENT APPLICATION**
published in accordance with Art. 153(4) EPC

(43) Date of publication:
**13.04.2022 Bulletin 2022/15**

(21) Application number: **20818458.0**

(22) Date of filing: **22.05.2020**

(51) International Patent Classification (IPC):
**G01S 7/493** (2006.01)    **G01S 17/32** (2020.01)
**G01S 17/95** (2006.01)

(52) Cooperative Patent Classification (CPC):
**G01S 7/493; G01S 17/32; G01S 17/95;** Y02A 90/10

(86) International application number:
**PCT/JP2020/020339**

(87) International publication number:
**WO 2020/246269 (10.12.2020 Gazette 2020/50)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **06.06.2019 JP 2019106475**

(71) Applicant: **MITSUBISHI ELECTRIC
CORPORATION
Chiyoda-ku
Tokyo 100-8310 (JP)**

(72) Inventors:
• **KAMEYAMA, Shumpei**
  **Tokyo 100-8310 (JP)**
• **KOTAKE, Nobuki**
  **Tokyo 100-8310 (JP)**
• **KAJIYAMA, Yutaka**
  **Tokyo 100-8310 (JP)**
• **SAKIMURA, Takeshi**
  **Tokyo 100-8310 (JP)**
• **TAKABAYASHI, Mikio**
  **Tokyo 100-8310 (JP)**

(74) Representative: **Plasseraud IP
66, rue de la Chaussée d'Antin
75440 Paris Cedex 09 (FR)**

(54) **COHERENT LIDAR DEVICE**

(57)    A coherent lidar device (100) includes a transmission and reception unit (30) to transmit an optical signal to the atmosphere and to receive scattered light of the optical signal, a first switch (9) to divide temporally a reception signal generated from the scattered light received by the transmission and reception unit (30) into two signals, a microwave amplifier (10) to amplify the two signals divided by the first switch (9) at amplification factors different from each other, a microwave switch (11) to multiplex the two signals amplified by the microwave amplifier (10) at the amplification factors different from each other into one signal, an A/D converter (12) to convert the one signal multiplexed by the microwave switch (11) into a digital signal, a signal processing unit (13) to process the digital signal, and a control unit (14) to control operations of the transmission and reception unit (30), the first switch (9), the microwave switch (11), and the A/D converter (12).

FIG. 1

**Description**

TECHNICAL FIELD

The present disclosure relates to a coherent lidar device that measures wind velocity in the atmosphere.

BACKGROUND ART

For example, a coherent lidar device described in Patent Literature 1 transmits transmission light that is laser light to the atmosphere, receives scattered light, which is the transmission light scattered by aerosol, by coherent detection, and measures a Doppler frequency shift by analyzing a spectrum of a reception signal. The Doppler frequency shift is converted into a Doppler wind velocity. The Doppler wind velocity is a Doppler velocity of the aerosol in the transmission direction of the laser light.

CITATION LIST

PATENT LITERATURE

Patent Literature 1: International Publication No. 2002/093193

SUMMARY OF INVENTION

TECHNICAL PROBLEM

In the coherent lidar device, it is important to calibrate the distance and the Doppler wind velocity. Calibrating the distance is to determine a position on the time axis of the reception signal, the position corresponding to a distance of 0 meters from the coherent lidar device, and calibrating the Doppler wind velocity is to determine a position on the frequency axis of the reception signal, the position corresponding to 0 meters per second of a Doppler velocity.

In general, among the signals received by the coherent lidar device, a signal being the signal component (hereinafter, described as an internal scattered component), which is the transmission light scattered inside the device and received, is significantly larger than a signal being the signal component (hereinafter, described as a scattered component from the atmosphere), which is the transmission light scattered by the aerosol in the atmosphere. Therefore, when the signals of both components are amplified, the signal described as the internal scattered component is saturated to generate a "Blind zone" where the wind velocity cannot be measured.

The coherent lidar device described in Patent Literature 1 divides a reception signal into a signal described as an internal scattered component and a signal described as a scattered component from the atmosphere by using a microwave switch, and distributes the divided signals to a system of A/D converting the signal described as the internal scattered component to perform signal processing and to a system of A/D converting the signal described as the scattered component from the atmosphere to perform signal processing. As a result, saturation of the signal described as the internal scattered component is avoided, but there is a problem that two A/D converters are required for signal processing.

The present disclosure has been made to solve the above problems, and an object of the present disclosure is to obtain a coherent lidar device capable of performing signal processing by one system of A/D converter without saturating a signal described as an internal scattered component.

SOLUTION TO PROBLEM

A coherent lidar device according to the present disclosure includes: a transmission and reception unit to transmit an optical signal to an atmosphere and to receive scattered light of the optical signal; a first switch to divide temporally a reception signal generated from the scattered light received by the transmission and reception unit into two signals; an amplifier unit to amplify two signals divided by the first switch at amplification factors different from each other; a multiplexing unit to multiplex the two signals amplified by the amplifier unit at different amplification factors into one signal; an A/D converter to convert the one signal multiplexed by the multiplexing unit into a digital signal; a signal processing unit to process the digital signal; and a control unit to control operations of the transmission and reception unit, the first switch, the multiplexing unit, and the A/D converter.

ADVANTAGEOUS EFFECTS OF INVENTION

According to the present disclosure, the signal can be processed by one system of A/D converter without saturating the signal described as the internal scattered component.

BRIEF DESCRIPTION OF DRAWINGS

FIG. 1 is a block diagram illustrating a configuration of a coherent lidar device according to a first embodiment.
FIG. 2 is a diagram illustrating an example of a reception signal inputted to a microwave switch.
FIG. 3 is a diagram illustrating signals inputted to and outputted from a microwave switch, a microwave amplifier, and an A/D converter.
FIG. 4 is a diagram illustrating a signal described as an internal scattered component and a signal described as a scattered component from the atmosphere, and time sections set to these signals.
FIG. 5 is a schematic diagram illustrating an outline of signal processing of the coherent lidar device according to the first embodiment.

FIG. 6 is a block diagram illustrating a configuration of a coherent lidar device according to a second embodiment.

DESCRIPTION OF EMBODIMENTS

First Embodiment.

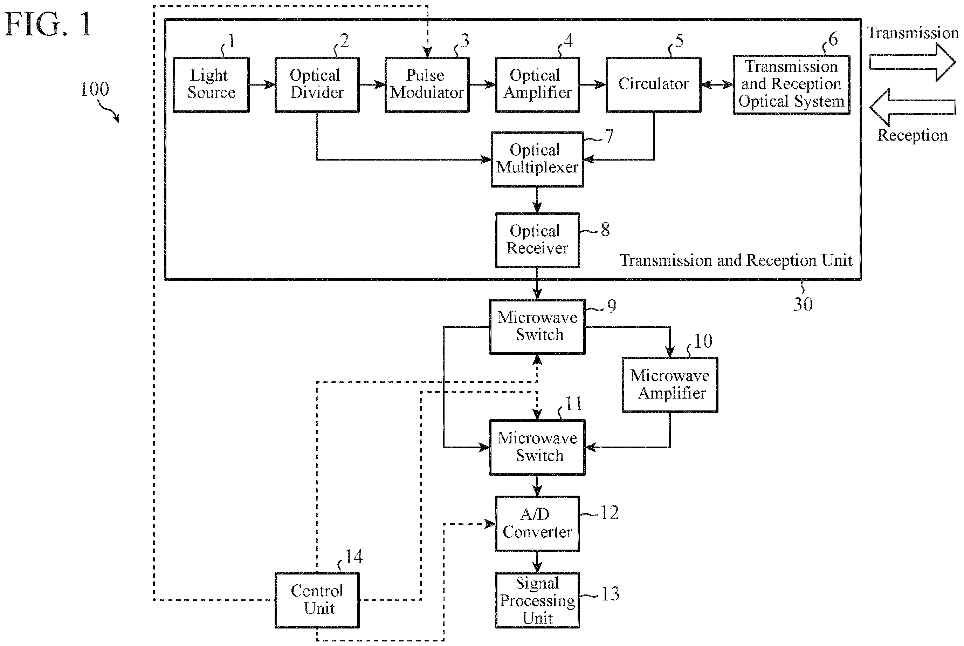

FIG. 1 is a block diagram illustrating a configuration of a coherent lidar device 100 according to a first embodiment. The coherent lidar device 100 illustrated in FIG. 1 transmits transmission light to the atmosphere, receives scattered light, which is the transmission light scattered by aerosol, by coherent detection, and measures a Doppler wind velocity of aerosol by analyzing a spectrum (reception spectrum) of a reception signal generated from the scattered light. The coherent detection is homodyne detection or heterodyne detection. As illustrated in FIG. 1, the coherent lidar device 100 includes a transmission and reception unit 30 including a light source 1, an optical divider 2, a pulse modulator 3, an optical amplifier 4, a circulator 5, a transmission and reception optical system 6, an optical multiplexer 7, and an optical receiver 8, a microwave switch 9, a microwave amplifier 10, a microwave switch 11, an A/D converter 12, a signal processing unit 13, and a control unit 14.

In addition, in FIG. 1, the light source 1 and the optical divider 2, the optical divider 2, the pulse modulator 3, and the optical multiplexer 7, the pulse modulator 3 and the optical amplifier 4, the optical amplifier 4 and the circulator 5, the circulator 5 and the transmission and reception optical system 6, the circulator 5 and the optical multiplexer 7, and the optical multiplexer 7 and the optical receiver 8 are all connected by an optical fiber. Furthermore, the control unit 14 is connected to each of the pulse modulator 3, the microwave switch 9, the microwave switch 11, and the A/D converter 12 by an electric signal line.

The principle of wind velocity measurement of the coherent lidar device 100 illustrated in FIG. 1 is a so-called coherent system. Wind velocity measurement of coherent system is described, for example, in Reference Literature 1 shown below. Although FIG. 1 illustrates the transmission and reception unit 30 in which the components are connected to each other by an optical fiber, the coherent lidar device 100 is not limited to this configuration. For example, some components may be electrically wired. Furthermore, in the coherent lidar device 100 illustrated in FIG. 1, the transmission light is amplified using the optical amplifier 4 in order to measure the wind velocity at a farther position, but the optical amplifier 4 may be omitted if the target region for measuring the wind velocity is a short distance region.

(Reference Literature 1) T. Ando et al., "All-fiber coherent Doppler technologies at Mitsubishi Electric Corporation", IOP Conference Series: Earth and Environmental Science, Volume 1, 2008.

The light source 1 generates an optical signal that is a continuous wave. The optical divider 2 divides the optical signal outputted from the light source 1 and distributes to the pulse modulator 3 and the optical multiplexer 7. The pulse modulator 3 pulse-modulates one optical signal distributed by the optical divider 2. The pulse modulation by the pulse modulator 3 is controlled by the control unit 14. The optical amplifier 4 amplifies the optical signal pulse-modulated by the pulse modulator 3. The circulator 5 sends the optical signal amplified by the optical amplifier 4 to the transmission and reception optical system 6, and sends the optical signal received from the atmosphere by the transmission and reception optical system 6 to the optical multiplexer 7. The transmission and reception optical system 6 transmits the optical signal sent from the circulator 5 to the atmosphere, and receives scattered light which is the optical signal scattered by aerosol in the atmosphere. The optical multiplexer 7 multiplexes the other optical signal divided by the optical divider 2 and the optical signal from the circulator 5. The optical receiver 8 converts the optical signal outputted from the optical multiplexer 7 into an electrical signal.

The microwave switch 9 is a first switch that divides a reception signal received by the transmission and reception unit 30 temporally into two signals and supplies the divided signals to the microwave amplifier 10 and the microwave switch 11. The microwave amplifier 10 amplifies the signal supplied from the microwave switch 9 at a predetermined amplification factor. The microwave switch 11 is a second switch that connects temporally the signal amplified by the microwave amplifier 10 and the signal supplied from the microwave switch 9 by switching the signals in accordance with a timing signal. The microwave amplifier 10 constitutes an amplifier unit for amplifying the two signals divided by the microwave switch 9 at amplification factors different from each other. The microwave switch 11 is a multiplexing unit for multiplexing two signals amplified by the microwave amplifier 10 at different amplification factors into one signal. The A/D converter 12 converts the one signal multiplexed by the microwave switch 11 into a digital signal. The signal processing unit 13 processes the digital signal outputted from the A/D converter 12. The control unit 14 controls operations of the pulse modulator 3, the microwave switch 9, the microwave switch 11, and the A/D converter 12 included in the transmission and reception unit 30.

Next, wind velocity measurement by the coherent lidar device 100 illustrated in FIG. 1 is described in detail. The control unit 14 outputs a pulse modulation signal to the pulse modulator 3, and outputs a trigger signal synchronized with the pulse modulation signal to each of the microwave switch 9, the microwave switch 11, and the A/D converter 12. Furthermore, the control unit 14 outputs, to the microwave switch 9 and the microwave switch 11, a timing signal for cutting out a signal being in a time range including the internal scattered component from the time waveform of the reception signal.

Since the time range including (receiving) the internal scattered component can be roughly grasped from the pulse modulation signal, it is possible to cut out a signal being in the time range including the internal scattered component. In a case where the length of the transmission path inside the coherent lidar device 100 cannot be accurately grasped, it is not possible to grasp an accurate time when the internal scattered component is received.

The optical divider 2 divides a continuous wave optical signal outputted from the light source 1 into local light and transmission light, outputs the local light to the optical multiplexer 7, and outputs the transmission light to the pulse modulator 3. The pulse modulator 3 generates a signal described as an intermediate frequency by applying pulse modulation and optical frequency shift to the transmission light divided by the optical divider 2. For example, the pulse modulator 3 is an AO (Acousto-Optic) frequency shifter.

The transmission light pulse-modulated by the pulse modulator 3 is amplified by the optical amplifier 4 and then transmitted to the atmosphere through the circulator 5 and the transmission and reception optical system 6. The scattered light which is the transmission light scattered by aerosol in the atmosphere is received by the transmission and reception optical system 6, and the received light is sent to the optical multiplexer 7 through the circulator 5. The optical multiplexer 7 multiplexes the local light and the received light and outputs the multiplexed light to the optical receiver 8. The optical receiver 8 detects coherently the optical signal from the optical multiplexer 7, and outputs the detected signal to the microwave switch 9 as a reception signal.

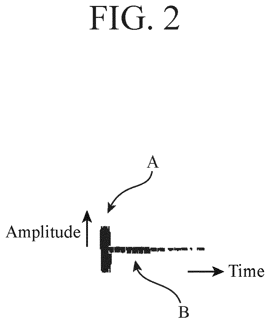

FIG. 2 is a diagram illustrating an example of a reception signal inputted to the microwave switch 9. As illustrated in FIG. 2, the reception signal includes an internal scattered component A which is a part of the transmission light scattered and generated in the transmission and reception optical system 6. Since the internal scattered component A is scattered and generated inside the coherent lidar device 100, the internal scattered component A exists at a position on the time axis of the reception signal, the position corresponding to a distance of 0 meter from the coherent lidar device 100. As illustrated in FIG. 2, the internal scattered component A is at a level extremely larger than the scattered component B from the atmosphere. The internal scattered component A exists in an approximately known time range in the reception signal, and the scattered component B from the atmosphere exists in a time range different from the internal scattered component A because the coherent lidar device 100 transmits and receives pulsed light.

Here, the operation from the input of the reception signal to the microwave switch 9 to the input of the signal to the A/D converter 12 is described in detail.

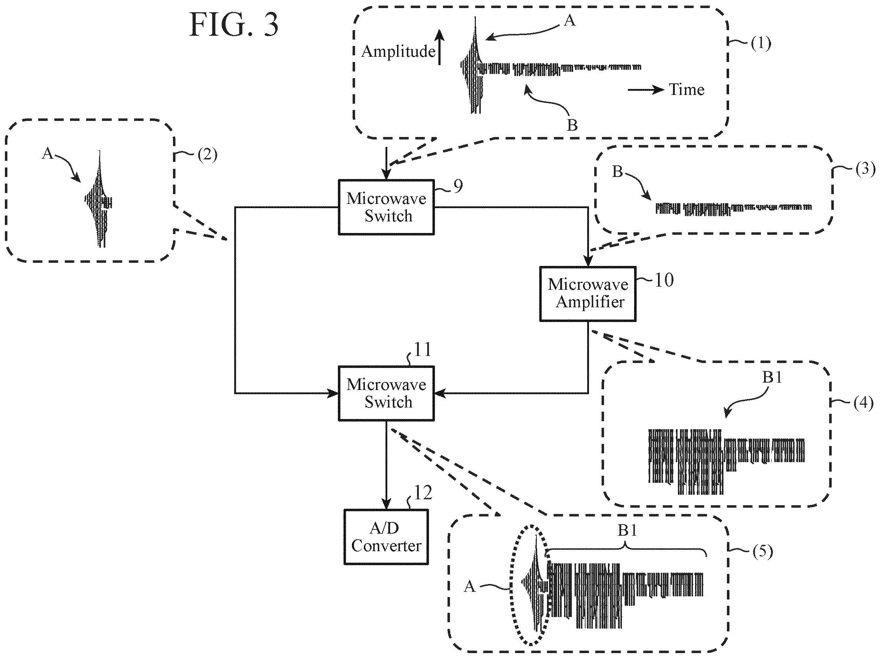

FIG. 3 is a diagram illustrating signals inputted to and outputted from the microwave switches 9 and 11, the microwave amplifier 10, and the A/D converter 12. The optical receiver 8 outputs the reception signal illustrated in balloon (1) shown in FIG. 3 to the microwave switch 9. The microwave switch 9 extracts a signal in a time range including the internal scattered component A illustrated in balloon (2) shown in FIG. 3 from the reception signal on the basis of the timing signal from the control unit 14, and outputs the extracted signal to the microwave switch 11. The signal in the time range including the internal scattered component A is outputted to the microwave switch 11 without being amplified.

Further, the microwave switch 9 outputs, to the microwave amplifier 10, a signal (scattered component B from the atmosphere) in a time range not including the internal scattered component A illustrated in balloon (3) shown in FIG. 3 in the reception signal on the basis of the timing signal from the control unit 14. The microwave amplifier 10 amplifies the signal described as the scattered component B from the atmosphere inputted from the microwave switch 9 to output a signal described as a scattered component B 1 from the atmosphere illustrated in balloon (4) shown in FIG. 3 to the microwave switch 11. The signal described as the scattered component B1 from the atmosphere is a signal obtained by amplifying the signal described as the scattered component B from the atmosphere by the microwave amplifier 10. That is, an amplification factor of the signal described as the scattered component B from the atmosphere is larger than that of the signal in the time range including the internal scattered component A. As described above, the microwave amplifier 10 amplifies the two signals divided temporally by the microwave switch 9 at amplification factors different from each other. The internal scattered component A that is not amplified is thought to be amplified at an amplification factor = 1.

The control unit 14 outputs a timing signal to the microwave switch 11. The microwave switch 11 receives, in synchronization with the timing signal, a signal in a time range including the internal scattered component A that is not amplified and a signal described as the scattered component B 1 from the atmosphere amplified by the microwave amplifier 10, the signals each being obtained from the same reception signal. The microwave switch 11 generates a signal illustrated in balloon (5) shown in FIG. 3 by arranging these signals on the time axis and multiplexing these signals into one signal in the time domain, and outputs the generated signal to the A/D converter 12. In the signal shown in balloon (5) shown in FIG. 3, since the signal described as the internal scattered component A having a high level is not amplified and the signal described as the scattered component B from the atmosphere having a low level is amplified, the signals of these components are at levels similar to each other.

As described above, the signal described as the internal scattered component A is at a much higher level than the signal described as the scattered component B from the atmosphere. Therefore, it is important for the microwave amplifier 10 to amplify the signal described as the scattered component B from the atmosphere to be a level substantially equal to the level of the signal described as the internal scattered component A. For example, another microwave amplifier 10 may be provided also between the microwave switch 9 and the microwave switch 11, and the other microwave amplifier 10 may amplify the signal described as the internal scattered component A at an amplification factor smaller than that of the scattered component B from the atmosphere, so that the signal described as the internal scattered component A and the signal described as the scattered component B from the atmosphere are at the similar level. Further, when the level of the signal described as the internal scattered component A is extremely high, a microwave attenuator may be provided between the microwave switch 9 and the microwave switch 11 to attenuate the signal described as the internal scattered component A. The amplifier unit includes at least one amplifier. The amplifier unit may include an attenuator that attenuates a signal.

Next, processing from input of a signal to the A/D converter 12 to signal processing executed by the signal processing unit 13 is described in detail.

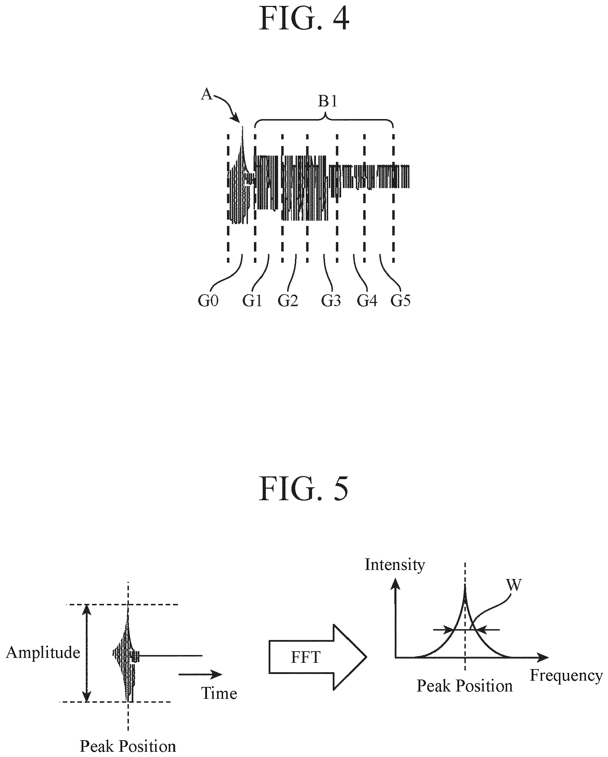

FIG. 4 is a diagram illustrating a signal described as the internal scattered component A and a signal described as the scattered component B1 from the atmosphere, and time sections G0 to G5 set to these signals. The A/D converter 12 A/D converts the reception signal illustrated in balloon (5) shown in FIG. 3 in synchronization with the trigger signal from the control unit 14 into a digital signal. The time section is a section obtained by dividing temporally a reception signal that is a digital signal.

The signal processing unit 13 divides the reception signal converted into the digital signal by the A/D converter 12 into the time sections G0 to G5 set at positions on the time axis corresponding to the respective measurement distances. At this time, as illustrated in FIG. 4, the signal processing unit 13 sets the temporally first time section G0 in the time range including the internal scattered component A. Subsequently, the signal processing unit 13 sets sequentially the time sections G1 to G5 to the time range including the scattered component B 1 from the atmosphere.

The signal processing unit 13 analyzes the time waveform of the signal described as the internal scattered component A extracted from the digital signal by setting the time section G0 to the digital signal, thereby determining a position on the time axis of the reception signal, the position corresponding to the distance of 0 meter from the coherent lidar device 100. For example, the absolute value of the time waveform of the signal described as the internal scattered component A is obtained, and the position on the time axis where the absolute value is the maximum is determined as the position corresponding to the distance of 0 meter from the coherent lidar device 100.

FIG. 5 is a schematic diagram illustrating an outline of signal processing of the coherent lidar device 100 according to the first embodiment, and illustrates processing of determining a position on a frequency axis of a reception signal, the position corresponding to 0 meters per second of a Doppler velocity. As illustrated in FIG. 5, the signal processing unit 13 performs Fourier transform (in the example shown in FIG. 5, fast Fourier transform (FFT)) on the signal described as the internal scattered component A extracted by setting the time section G0 to obtain a spectrum.

The internal scattered component A is a signal component which is a part of the optical signal scattered inside the coherent lidar device 100 and received. The internal scattered component A is a signal scattered at a scattering point having no moving speed. The internal scattered component A has no Doppler frequency shift. Therefore, the frequency having a peak in the spectrum obtained by processing the signal described as the internal scattered component A by FFT is a frequency corresponding to a position on the frequency axis of the reception signal, the position corresponding to 0 meters per second of the Doppler velocity. The signal processing unit 13 analyzes the spectrum of the signal described as the internal scattered component A and calculates a frequency having a peak in the spectrum, thereby determining a position on the frequency axis of the reception signal, the position corresponding to 0 meters per second of the Doppler velocity.

Next, the signal processing unit 13 processes each signal described as the scattered component B1 from the atmosphere extracted by setting the time sections G1 to G5 to the digital signal by FFT, and calculates a reception spectrum corresponding to each distance. For example, the coherent lidar device 100 transmits pulses of transmission light to the atmosphere a specified number of times, and the signal processing unit 13 calculates a reception spectrum each time and integrates the calculated reception spectrum, thereby improving the SN ratio.

The signal processing unit 13 obtains the Doppler frequency from the peak frequency of the integrated reception spectrum. The Doppler frequency of the scattered component B1 from the atmosphere corresponds to the difference between the peak frequency of the reception spectrum and the frequency corresponding to a position on the frequency axis of the reception signal, the position corresponding to 0 meters per second of the Doppler velocity. Here, the Doppler frequency of the scattered component B1 from the atmosphere is fd, and the wavelength of the transmission light is λ. The moving speed of the scatterer (for example, aerosol) in the atmosphere, that is, the Doppler wind velocity V is calculated using the following equation (1).

$$V = fd \times \lambda \div 2 \cdots (1)$$

The signal processing unit 13 calculates the distance D in the atmosphere corresponding to each signal extracted by setting the time sections G1 to G5 in the digital signal in accordance with the following equation (2). In equation (2), the position of the center of the section Gj, which is one of the time sections G1 to G5 on the time axis, is denoted by Tj, the position on the time axis at which the absolute value of the time waveform of the signal described as the internal scattered component A peaks is denoted by TO, and the light speed is denoted by c. The distance Dj in the atmosphere is a distance from the coherent lidar device 100 to a position where the wind velocity is measured.

$$Dj=(Tj\text{-}T0)\times c\div2\cdots(2)$$

The signal processing unit 13 detects relatively the state of the transmission light, for example, the intensity of the transmission light from the amplitude of the time waveform, on the basis of the time waveform of the signal described as the internal scattered component A. Here, the signal processing unit 13 determines that the intensity of the optical signal (the optical signal transmitted to the atmosphere) generated by the light source 1 is abnormal when the amplitude of the time waveform of the signal described as the internal scattered component A is smaller than a preset specified value, and determines that the intensity of the optical signal is normal when the amplitude of the time waveform of the signal described as the internal scattered component A is equal to or larger than the specified value. The intensity of the optical signal can be detected as described above by multiplexing both of the internal scattered component A and the scattered component B from the atmosphere in the reception signal to one signal in the time domain at a similar level without saturating.

In addition, the signal processing unit 13 detects whether or not the line width (coherency) of the optical signal generated by the light source 1 is normal from the spread of the spectrum obtained by applying FFT to the signal described as the internal scattered component A. The line width of the optical signal is an important factor in coherent detection. For example, as illustrated in FIG. 5, the signal processing unit 13 determines that the line width of the optical signal is abnormal when the frequency width W of the spectrum is greater than or equal to a specified value, and determines that the line width of the optical signal is normal when the frequency width W is less than the specified value. The line width of the optical signal described above can be detected by multiplexing both of the internal scattered component A and the scattered component B from the atmosphere in the reception signal to one signal in the time domain at a similar level without saturating.

The coherent lidar device 100 measures the wind velocity in the atmosphere while calibrating the distance and the Doppler velocity. The coherent lidar device may perform calibration when the wind velocity is not measured. For example, the coherent lidar device 100 can calibrate the distance and the Doppler velocity even in a state where the emission end of the transmission light of the transmission and reception optical system 6 is blocked by the shutter. That is, the coherent lidar device 100 can measure the wind velocity accurately by calibrating the distance and the Doppler velocity at the manufacturing stage and setting the calibration value in the signal processing unit 13. Further, the coherent lidar device 100 can determine whether or not the intensity and the line width of the optical signal are normal at the manufacturing stage.

As described above, the coherent lidar device 100 divides the reception signal into two signals, amplifies the two divided signals at amplification factors different from each other, multiplexes the two signals into one signal, and converts the one multiplexed signal into a digital signal. As a result, a signal can be processed by one system of A/D converter. That is, the coherent lidar device 100 multiplexes the internal scattered component and the scattered component from the atmosphere, as signals of a similar level without saturating both components, into one signal in the time domain. The signal in the time domain is converted into a digital signal by one system of A/D converter, and the signal processing unit 13 analyzes the digital signal to determine a position on the time axis of the reception signal, the position corresponding to the distance of 0 meter from the coherent lidar device 100 and determine a position on the frequency axis of the reception signal, the position corresponding to 0 meters per second of the Doppler velocity.

Second Embodiment.

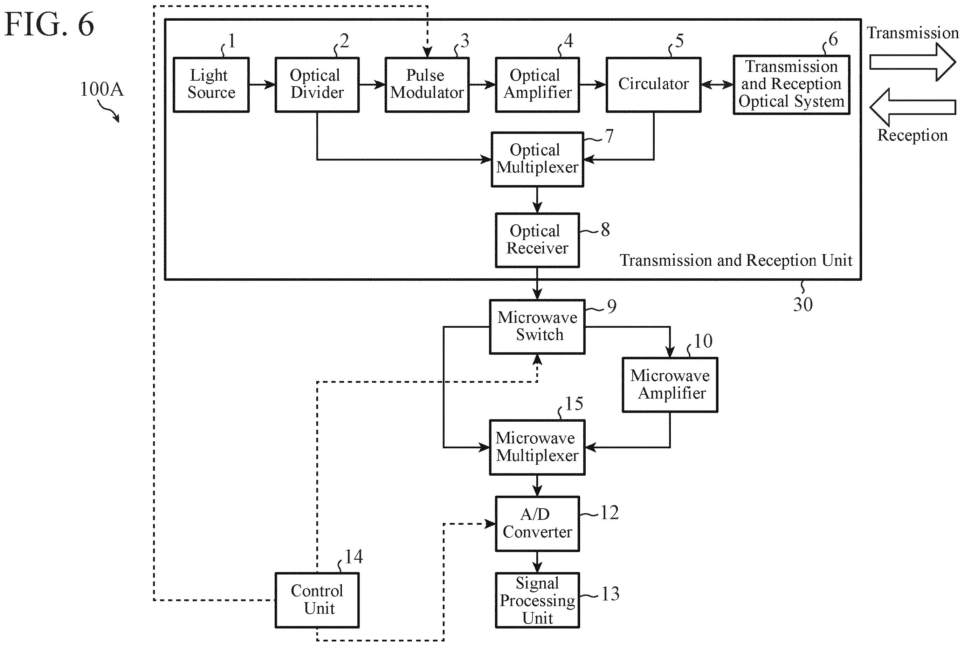

FIG. 6 is a block diagram illustrating a configuration of a coherent lidar device 100A according to a second embodiment. The coherent lidar device 100A illustrated in FIG. 6 transmits the transmission light to the atmosphere, receives the scattered light which is the transmission light scattered by aerosol by coherent detection, and measures the Doppler wind velocity of the aerosol by analyzing the spectrum of the reception signal. The coherent lidar device 100A has the same basic configuration as the coherent lidar device 100 illustrated in FIG. 1, and is different in that a microwave multiplexer 15 is provided instead of the microwave switch 11.

The microwave switch 11 illustrated in FIG. 1 connects, in synchronization with the timing signal from the control unit 14, so as to be continuous on the time axis, a signal in a time range including the internal scattered component A that is not amplified and a signal described as the scattered component B 1 from the atmosphere amplified by the microwave amplifier 10, the signals each being obtained from the same reception signal. On the other hand, the microwave multiplexer 15 is a multiplexer that multiplexes inputted signals regardless of the timing signal from the control unit 14. Therefore, the control unit 14 and the microwave multiplexer 15 are not connected by an electric signal line. Multiplexing means overlapping two signals.

As described above, the coherent lidar device 100A divides the reception signal into two signals, amplifies the divided two signals at amplification factors different from each other, multiplexes the two signals into one signal by the microwave multiplexer 15, and converts the one multiplexed signal into a digital signal. As a result, the same effect as that of the coherent lidar device 100 can be obtained, and the electric signal line for sending the timing signal from the control unit 14 to the microwave multiplexer 15 can be omitted, so that the device configuration can be made simpler than that of the coherent lidar device 100.

Combinations of the respective embodiments, modifications of any components of the respective embodiments, or omissions of any components in the respective embodiments are possible.

INDUSTRIAL APPLICABILITY

The coherent lidar device according to the present disclosure can be used, for example, for measuring the wind velocity in the atmosphere.

REFERENCE SIGNS LIST

1: light source, 2: optical divider, 3: pulse modulator, 4: optical amplifier, 5: circulator, 6: transmission and reception optical system, 7: optical multiplexer, 8: optical receiver, 9: microwave switch, 10: microwave amplifier, 11: microwave switch (multiplexing unit), 12: A/D converter, 13: signal processing unit, 14: control unit, 15: microwave multiplexer (multiplexing unit), 30: transmission and reception unit, 100, 100A: coherent lidar device

**Claims**

1. A coherent lidar device, comprising:

   a transmission and reception unit to transmit an optical signal to an atmosphere and to receive scattered light of the optical signal;
   a first switch to divide temporally a reception signal generated from the scattered light received by the transmission and reception unit into two signals;
   an amplifier unit to amplify two signals divided by the first switch at amplification factors different from each other;
   a multiplexing unit to multiplex the two signals amplified by the amplifier unit at different amplification factors into one signal;
   an A/D converter to convert the one signal multiplexed by the multiplexing unit into a digital signal;

   a signal processing unit to process the digital signal; and
   a control unit to control operations of the transmission and reception unit, the first switch, the multiplexing unit, and the A/D converter.

2. The coherent lidar device according to claim 1, wherein the multiplexing unit is a second switch to connect temporally the two temporally divided signals.

3. The coherent lidar device according to claim 1, wherein the multiplexing unit is a multiplexer to overlap the two signals.

4. The coherent lidar device according to any one of claims 1 to 3, wherein the signal processing unit extracts a signal described as an internal scattered component which is a part of the optical signal scattered inside the device and received, depending on time sections dividing the digital signal temporally.

5. The coherent lidar device according to claim 4, wherein the signal processing unit analyzes the signal described as the internal scattered component to determine a position on a time axis of the reception signal, the position corresponding to a distance of 0 meter from the device.

6. The coherent lidar device according to claim 4, wherein the signal processing unit analyzes a spectrum of the signal described as the internal scattered component to determine a position on a frequency axis of the reception signal, the position corresponding to 0 meters per second of a Doppler velocity.

7. The coherent lidar device according to any one of claims 4 to 6, wherein the signal processing unit analyzes a signal described as the internal scattered component to detect one or both of intensity and a line width of the optical signal.

EP 3 982 158 A1

# FIG. 1

# FIG. 2

FIG. 3

# FIG. 4

# FIG. 5

FIG. 6

100A

Transmission and Reception Unit

1 Light Source → 2 Optical Divider → 3 Pulse Modulator → 4 Optical Amplifier → 5 Circulator → 6 Transmission and Reception Optical System

Transmission →
← Reception

7 Optical Multiplexer

8 Optical Receiver

30

9 Microwave Switch

10 Microwave Amplifier

15 Microwave Multiplexer

12 A/D Converter

13 Signal Processing Unit

14 Control Unit

EP 3 982 158 A1

## INTERNATIONAL SEARCH REPORT

International application No.

PCT/JP2020/020339

### A. CLASSIFICATION OF SUBJECT MATTER

G01S 7/493(2006.01)i; G01S 17/32(2020.01)i; G01S 17/95(2006.01)i
FI: G01S7/493; G01S17/95; G01S17/32

According to International Patent Classification (IPC) or to both national classification and IPC

### B. FIELDS SEARCHED

Minimum documentation searched (classification system followed by classification symbols)

G01S 7/48-G01S 7/51, G01S 17/00-G01S 17/95, G01B 11/00-G01B 11/30, G01C 3/00-G01C 3/32

Documentation searched other than minimum documentation to the extent that such documents are included in the fields searched

| | |
|---|---|
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X<br>Y<br>A | WO 2004/106971 A1 (MITSUBISHI ELECTRIC CORP.) 09.12.2004 (2004-12-09) * page 6, line 13 to page 11, line 3, fig. 1 * | 1<br>2-4<br>5-7 |
| Y | JP 2003-051810 A (NIPPON TELEGRAPH AND TELEPHONE CORP.) 21.02.2003 (2003-02-21) * paragraphs [0022]-[0036] * | 2-4 |
| A | WO 2017/130315 A1 (MITSUBISHI ELECTRIC CORP.) 03.08.2017 (2017-08-03) * whole document * | 1-7 |
| A | WO 2014/002564 A1 (MITSUBISHI ELECTRIC CORP.) 03.01.2014 (2014-01-03) * whole document * | 1-7 |
| A | JP 2000-338246 A (MITSUBISHI ELECTRIC CORP.) 08.12.2000 (2000-12-08) * whole document * | 1-7 |

☐ Further documents are listed in the continuation of Box C.    ☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 01 July 2020 (01.07.2020) | 14 July 2020 (14.07.2020) |

| Name and mailing address of the ISA/<br>Japan Patent Office<br>3-4-3, Kasumigaseki, Chiyoda-ku,<br>Tokyo 100-8915, Japan | Authorized officer |
|---|---|
| | Telephone No. |

Form PCT/ISA/210 (second sheet) (January 2015)

INTERNATIONAL SEARCH REPORT
Information on patent family members

International application No.

PCT/JP2020/020339

| Patent Documents referred in the Report | Publication Date | Patent Family | Publication Date |
|---|---|---|---|
| WO 2004/106971 A1 | 09 Dec. 2004 | US 2006/0071846 A1 * paragraphs [0036]-[0058], fig. 1 * EP 1640747 A1 | |
| JP 2003-051810 A | 21 Feb. 2003 | (Family: none) | |
| WO 2017/130315 A1 | 03 Aug. 2017 | US 2019/0018144 A1 EP 3410155 A1 CN 109073755 A | |
| WO 2014/002564 A1 | 03 Jan. 2014 | US 2015/0331110 A1 EP 2866050 A1 CN 104335068 A | |
| JP 2000-338246 A | 08 Dec. 2000 | US 6580497 B1 EP 1055941 A2 | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2002093193 A

**Non-patent literature cited in the description**

- **T. ANDO et al.** All-fiber coherent Doppler technologies at Mitsubishi Electric Corporation. *IOP Conference Series: Earth and Environmental Science,* 2008, vol. 1